Europäisches Patentamt

European Patent Office

Office européen des brevets

(11) Publication number: **0 016 847**
A1

# EUROPEAN PATENT APPLICATION

(21) Application number: **79100853.5**

(51) Int. Cl.³: **B 60 D 1/00,** B 62 D 63/08

(22) Date of filing: **21.03.79**

(43) Date of publication of application: **15.10.80**
**Bulletin 80/21**

(71) Applicant: **PORTAKABIN LIMITED, Huntington York Y03 9PT, (GB)**

(72) Inventor: **Smith, Richard Anthony, 10 Greenfield Park Road, York (GB)**

(84) Designated Contracting States: **BE CH DE FR GB IT LU NL SE**

(74) Representative: **Leach, John Nigel et al, Forrester & Boehmert Widenmayerstrasse 5/IV, D-8000 München 22 (DE)**

(54) **Trailer towing connection.**

(57) Trailer having a plurality of ground wheels (20), a towing connection (70) and means for preventing (80, 81) or indicating unreadiness for use of the connection unless the trailer is in a towing condition. The ground wheels (20) may be retractable relative to a floor structure (13) from respective operative positions from which they transmit the weight of the trailer to the ground to enable it to be transported, to respective inoperative positions in which the weight of the trailer is transmitted to the ground at least primarily by supporting means other than said ground wheels (20) and in this case said towing condition is when the wheels (20) are in their operative position.

Alternatively or in addition the trailer may have a tail gate lift said towing condition in this case being when the tail gate is secured in a raised position.

JNL/DL/JW/77.066NLB

(Portakabin Limited)

Improvements in or relating to trailers

Description of Invention

This invention relates to trailers having a plurality of ground wheels and a towing connection whereby the trailer can be connected to a tractor vehicle.

Trailers can frequently be in a non-towing condition where they have equipment which can be in a condition where it is dangerous or otherwise undesirable for the trailer to be towed. For example, the ground wheels may be retractable relative to a floor structure of the trailer from respective operative positions, in which they transmit the weight of the trailer to the ground to enable it to be transported, to respective in-operative positions, in which the weight of the trailer is transmitted to the ground at least primarily by supporting means other than said ground wheels. It is dangerous for such a trailer to be towed when the ground wheels are not secured in their operative position and hence when the trailer is not in a towing condition.

In another example the trailer may have a tailgate lift and it is dangerous for the trailer to be towed when the tailgate is not secured in a raised position and hence the trailer is again not in a towing condition.

Other situations where it is not safe or desirable to tow the trailer unless the trailer is in a towing condition will be recognised by a person skilled in the art.

The invention as claimed is intended to provide a trailer having a plurality of ground wheels and a towing connection which is safe to use. By providing means for preventing, or indicating unreadiness for use of, the towing connection unless the trailer is in a towing condition the possibility of the trailer being used inadvertently in an unsafe condition is avoided.

The trailer may have a cover movable, into and out of a position in which the towing connection is obstructed, by a drive means actuated by a sensor which senses whether the trailer is in a towing condition.

Alternatively, the trailer may be provided with means to operate a switch in an electric circuit when a sensor indicates that the trailer is not in a towing condition and the electric circuit being arranged to operate an indicating means.

The indicating means may comprise a visual and/or audible indicating means.

The ground wheels may be retractable relative to a floor structure of the trailer from respective operative positions, in which they transmit the weight of the trailer to the ground to enable it to be transported, to respective inoperative positions in which the weight of the trailer is transmitted to the ground at least primarily by supporting means other than the said ground wheels and said sensor may sense that said wheels are in said operative position and hence that the trailer is in a towing condition.

Alternatively, the trailer may have a tailgate lift and said sensor may sense that said tailgate lift is in a raised position and hence that the trailer is in a towing condition.

Where the trailer has said retractable ground wheels and said movable cover the cover may be operatively coupled to the mechanism for retracting the wheels or to a mechanism for locking the wheels in said operative position so that the cover is moved into a position in which said towing connection is obstructed unless the wheels are in or locked in their operative positions.

The trailer may comprise a transportable building comprising an insulated body structure carried on a rigid floor structure affording a habitable space.

By "habitable space" we mean a space bounded by the wall structure affording an undivided area of not substantially less than about 2.5 square metres with a minimum horizontal dimension of about 1.5 metres and a height of not substantially less than 1.8 metres. It will be understood that the total area may be much greater than this minimum valve and is limited in practice only by restrictions imposed on widths and lengths of vehicles in general. Thus the habitable space may be up to about 3 metres wide and 20 metres long and may be sub-divided by internal partition walls to form two or more rooms or compartments at least one of which conforms to the minimum area referred to above, although some of the area may be taken up by interior fittings anciliary to the intended use of the habitable space, for example cupboards.

The trailer may have a dynamic floor loading capability of not less than 15 kg. per square metre and preferably at least 54 kg. per square metre, and a static floor loading capability of not less than 150 kg. per square metre but preferably at least 290 kg. per square metre, and a floor structure having a longitudinal stiffness of not less than 750 cm$^4$ but preferably at least 900 cm$^4$.

The trailer may have a floor structure including two longitudinally extending members each having a moment of inertia of not less than 450 cm$^4$. The floor structure may be not deeper than 250 mm but is preferably not deeper than 200 mm.

The trailer may be provided with a locking means to hold the wheels positively in an operative position during transport. The locking means may comprise a locking bolt provided adjacent each retractable wheel, said bolts being movable between locking and releasing positions and each locking bolt in its locking position being arranged positively to engage a movable part associated with its adjacent wheel in such a manner as to prevent retraction.

The locking bolts may have a transmission mechanism whereby all locking bolts may be moved simultaneously in one direction from a single operation station. Each locking bolt may include a chamfered face arranged to engage complementary faces on the movable parts and the bolt itself may be mounted in such a manner as to have a degree of free movement in a longitudinal direction so as to accommodate wear which may occur at such contacting faces.

Each wheel of the trailer may be carried at one end of an arm which at its other end is pivotally mounted on or adjacent to the floor structure and associated with each such arm there is provided an anxiliary arm which is pivotally connected to the wheel arm at or adjacent the position where the latter is itself pivotally supported and at the position remote from the point at which the two arms are pivotally interconnected they are further interconnected by the shock absorbing means, the assembly of wheel arm and auxiliary arms being movable about a first mentioned pivot between operative and retracted positions.

The means for moving the assembly of arms may comprise a mechanical jack or a ram acting between a fixed part of the trailer and a suitable location on the arm assembly. The locking means may engage the auxiliary arms.

The trailer may be provided with a retractable jockey wheel adjacent to the towing connection, and the jockey wheel may be mounted on a pivoted strut movable between an operative and retracted position by means of a ram.

The trailer may be adapted to rest directly on the ground when the transport wheels have been retracted either by means of the floor structure or a chassis beneath the floor structure.

Levelling jacks may be provided at appropriate positions to enable adjustments to be made for uneven ground.

The trailer may incorporate jacks through which the whole of the weight of the trailer may be transmitted to the ground when the transport wheels have been retracted and the floor structure or chassis is clear of the ground.

One example of the invention will now be described with reference to the accompanying drawings in which:-

FIGURE 1 is a side elevation of one embodiment of a trailer comprising a transportable building with retractable wheels;

FIGURE 2 is a section on the line 2-2 of Figure 1,

FIGURE 3 is a side elevation, to an enlarged scale, showing the mounting of the jockey wheel of the trailer of Figure 1,

FIGURE 4 is a side elevation to an enlarged scale, with parts omitted for clarity and partly broken away showing the mounting of a road wheel of the trailer of Figure 1,

FIGURE 5 is a section on the line 5-5 of Figure 4,

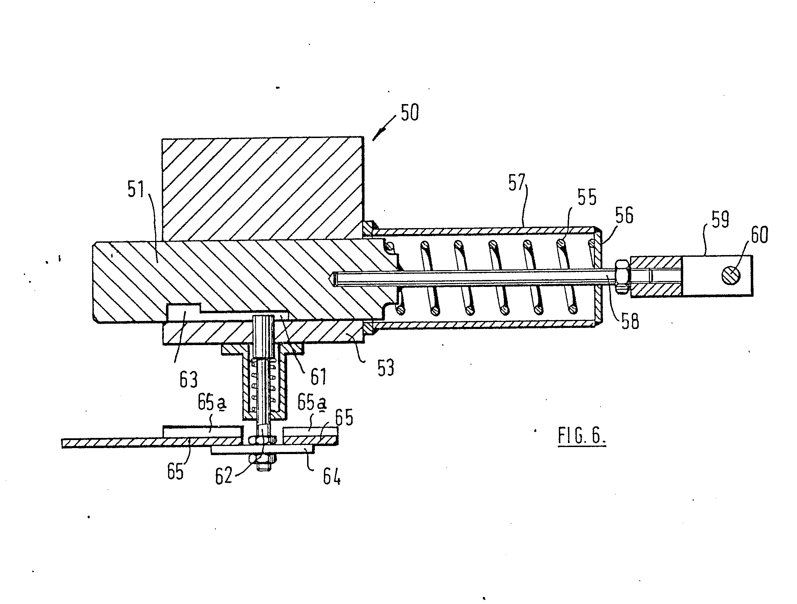

FIGURE6 is a sectional view on the line 6-6 of Figure 4,

FIGURE 7 is a circuit diagram of the electrical circuits of the trailer of Figure 1,

FIGURE 8 is a side elevation to an enlarged scale of a part of a modification of the trailer of Figure 1, and

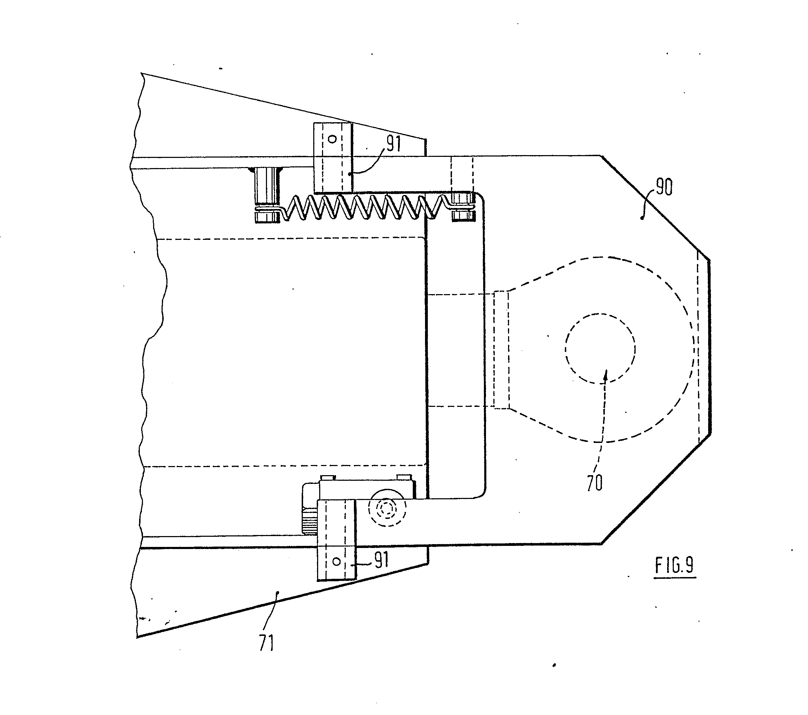

FIGURE 9 is a plan view of the part shown in Figure 8.

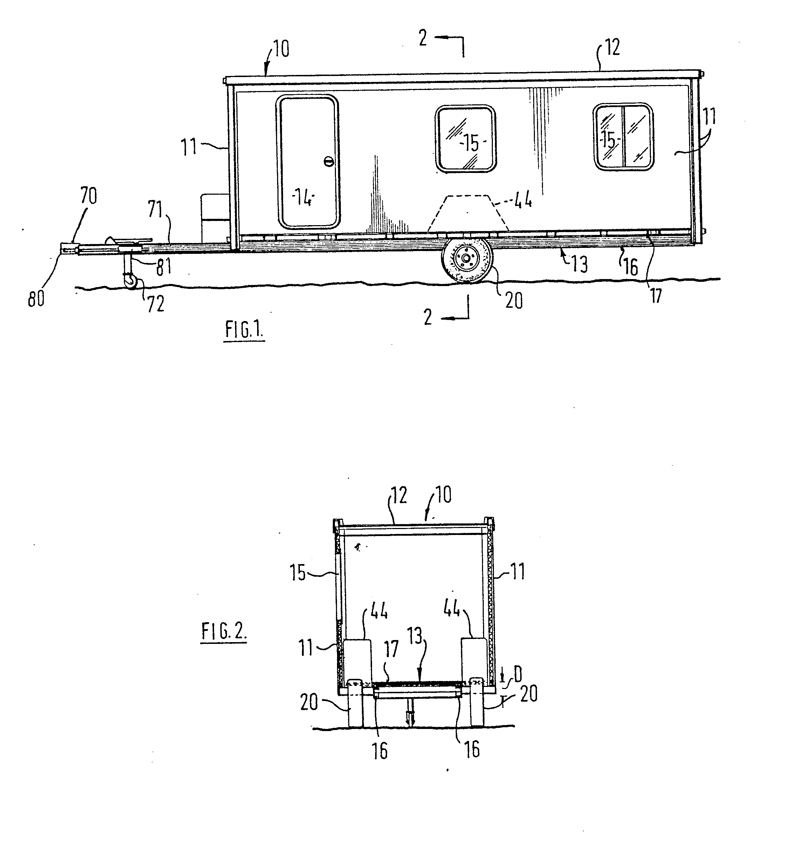

Referring firstly to Figures 1 and 2 there is shown in the accompanying drawings a trailer comprising a transportable building including a body structure 10 consisting of insulated wall panels 11 and a roof structure 12 supported on a rigid floor structure 13 and defining in combination a habitable space as herein defined with appropriate doors 14 and windows 15 provided in the wall panels 11.

The floor structure has a longitudinal stiffness of at least 900 $cm^4$ and comprises two longitudinally extending channel section members 16 each having a longitudinal moment of inertia of at least 450 $cm^4$.

Such a floor structure can be constructed so as to have a static floor loading capability of at least 150 $kg/M^2$ and typically 290 $Kg/M^2$ and a dynamic floor loading capability of at least 15 $Kg/M^2$ and typically 54 $Kg/M^2$.

A transportable building, to be suitable for its intended purpose, that is to be able to carry the loads for which it is intended in service and to be sufficiently robust for a wide variety of uses, must have a floor loading capacity and longitudinal stiffness not less than the minimum values set out above. A clear distinction will be noticed between the floor loading capacity and longitudinal stiffness of atransportable building embodying the present invention, and for example, a conventional domestic caravan in which, by comparison, the floor loading capacity and longitudinal stiffness are considerably less than in the case of a transportable building embodying the invention.

In addition, the floor structure has a depth D of 200 mm and it is preferred that the depth is not greater than 250 mm so that when the wheels are retracted, as described hereinafter, the height of the top of the floor structure is spaced relatively close to the ground thereby avoiding the inconvenience for relatively high step up to the building.

The floor structure also comprises a plurality of transverse members 17, which comprise galvanized steel 'C' section beams which are welded on top of the beams 16.

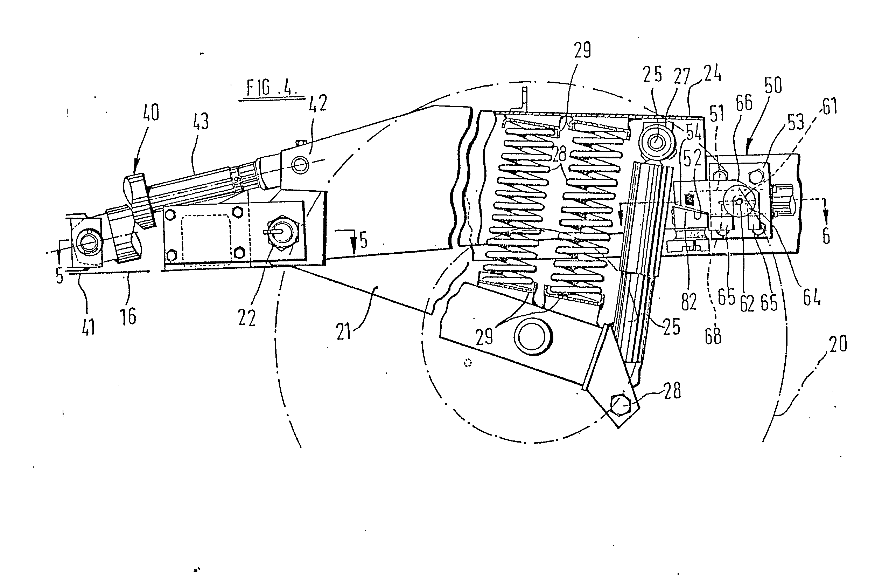

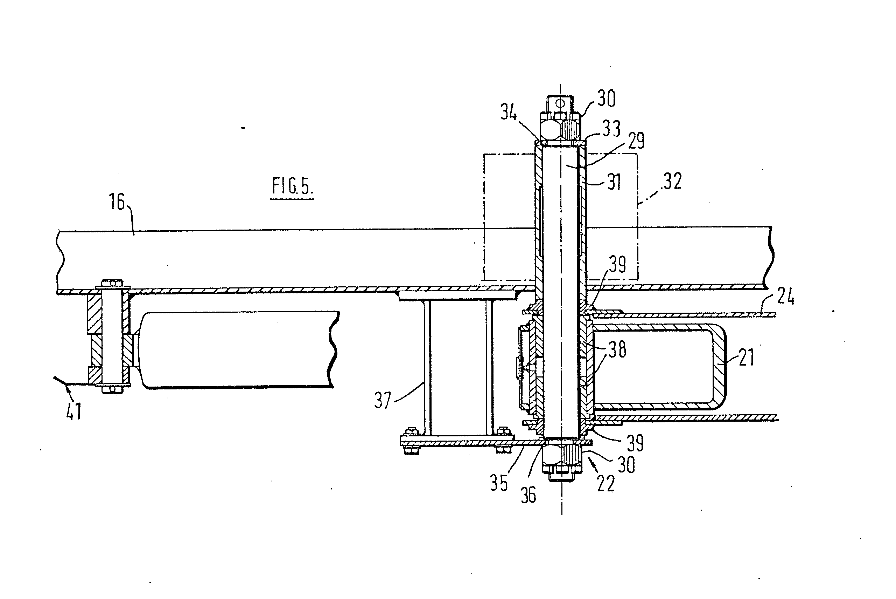

Ground or road wheels 20 are carried on the floor structure and as shown in Figure 4 each wheel 20 is carried by a trailing box section swinging arm 21 which is pivotally mounted at 22 to an associated one of the members 16 of the floor structure 13. Also pivoted at 22 is an auxiliary inverted channel section swinging arm 24. A shock absorber 25 is connected between the two arms 21 and 24 at positions adjacent their free ends by bolts 26 and resilient bushes 27 in conventional manner. Also connected between the two arms are a pair of coil compression springs 28, the end coils of which are received in pans 29 welded to the upwardly facing surface of the arm 21 and the downwardly facing surface of the arm 24. As can best be seen from Figure 5 the arms 21 and 24 are of such dimensions that the arm 21 is received within the channel section arm 24 and in use of the vehicle pivotal movement of the arm 21 relative to the arm 24 is permitted by the pivotal connection 22 and the hereinbefore mentioned springs 28 and shock absorber 25.

The pivotal connection 22 comprises a pivot pin 29 having threaded ends on which nuts 30 are received. A bearing sleeve 31 is clamped, by means indicated generally at 32 to the upper surface of the associated member 16 and has an inwardly directed flange 33 which is engaged between the nut 30 and a shoulder 34 on the pin 29. At its other end the end portion of the pin is received in an aperture formed in a plate 35 so that the plate 35 is again trapped between a nut 30 and a shoulder 36 the plate 35 being bolted to a bracket 37 fixed to the side of the member 16; thus the pivot pin is rigidly connected to the member 16.

The arm 21 carries bearing sleeves 38 engaged around the pivot pin 29 whilst the arm 24 carries a pair of spaced bearing members 39 also engaged around the pin 29. Thus both the arm 21 and the arm 24 are mounted for independent pivotal movement about the pin 29.

An hydraulic ram 40 is connected between a bracket 41 fixed to the member 16 and a position 42 on the arm 24. Thus, in use, when the piston rod 43 of the ram is extended the arm 24 is swung downwardly about the pivot pin 29 and thus the arm 21 is also caused to swing downwardly through the intermediary of the core compression springs 28 into an operative position shown in Figures 1, 2 and 4.

When the piston rod of the ram is retracted the arms 24 and 21 swing upwardly about the pivot pin 29 into a recess 44 formed in the floor of the building as the body structure 10 falls to the ground under its own weight.

Thus when the wheels 20 are in their operative position, as shown in Figure 1 with the rams 40 extended, the trailer may be towed by a suitable vehicle from a factory where it is assembled to a site where it is intended to be installed. When positioned on site, the road wheels can be retracted by depressurising the rams 40 thereby allowing the building unit to sink under its weight until its weight is transmitted to the ground at least primarily through other supporting members such as parts of the floor structure itself and/or levelling jacks (not shown) provided at or near corners of the floor structure. Alternatively, the building may be provided with additional supporting members which are themselves extensible from a retracted position which they occupy during transport to an operative position in which they engage the ground. In this case, such extensible supports would be extended before the road wheels are allowed to retract.

In order to prevent inadvertant retraction of the road wheels while the building is being transported, it is preferred to provide a locking means as indicated generally at 50 in Figure 4 to act on the anxiliary arm 24 and positively prevent retraction of the latter.

10.

The locking means 50 comprises a sliding bolt 51 of generally cylindrical configuration but having a planar inclined surface 52 at its lower operative end. The bolt 51 is slidably mounted in a mounted block 53 for movement into and out of a locking position in which its operative end is engaged with a block 54 provided at the rear end of the arm 24. A coil compression spring, 55 is arranged to act between the end of the bolt 51 and an end surface 56 of a housing 57 provided on the mounting block 53 to normally urge the bolt 51 into its locking position. A rod 58 is connected to the bolt 61 and carries a head 59 connected to an operating member 60. Thus the bolt is mounted in such a manner that it has a degree of free movement in the longitudinal direction whereby the bolt and block can be accommodated.

A stepped recess 61 is formed in the side surface of the bolt and a spring biased plunger 62 is normally urged into engagement with the recess so that when the bolt is in its retracted position the plunger 62 is engaged with the deeper part 63 of the recess and thus locks the bolt in its retracted position. A circular disc shaped head 64 is provided at the free end of the locking plunger and arms 65 of a fork 66 fixed to the arm 24 are adapted to be engaged between the head 64 and the mounting block 53 when the arm 24 is in position for towing so as to prevent locking of the bolt 61 in its retracted position. The ends 65a of the arms 65 are inclined to bias the head 64 and hence the plunger 62 outwardly automatically as the arm 24 moves into the twoing position.

It will be seen that when the bolt 51 is in its extended position engaged with the block 54 the auxiliary arms 24 are positively prevented from moving upwardly and thus the road wheels cannot accidentally be retracted should the hydraulic ram 40 fail.

The locking devices 50 associated with each road wheel 20 may be arranged to be operated independently providing suitab e manually engageable handles in association with the operating members 60 or the operating members 60 of each locking device 50 can be interconnected and arranged to be operated by a single manual or electrically or hydraulically operated, control. If desired a control position may be arranged in any desired location on the trailer such as at the forward end of the building when considering the direction in which it is intended to be towed.

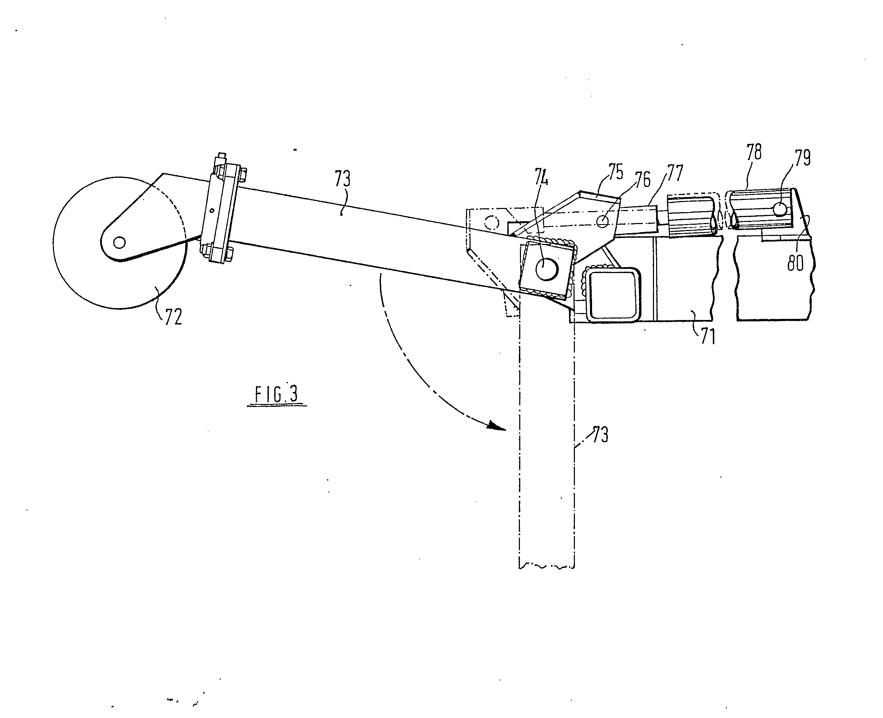

At the forward end of the trailer there is provided a towing connection 70 for connecting to any convenient type of draw bar or towing hook. Also provided at the forward end of the trailer is a conventional triangular frame 71 provided with a jockey wheel 72. As best shown in Figure 3 the jockey wheel 72 is mounted for movement between operative and inoperative positions by virtue of being carried on a strut 73 mounted on a pivot axis 74 carried by the triangular frame 71. The strut 73 has extension brackets 75 pivotally connected at 76 to the piston rod 77 of a hydraulic ram 78 the other end of which is pivotally connected at 79 to a bracket 80 fixed to the structure 71. Thus, when the piston rod 77 is retracted into the ram 78 the jockey wheel 72 is maintained in its retracted position shown in full line in Figure 3 whilst when the piston rod 77 is extended the strut 71 is moved to the chain dotted line positim shown in Figure 3 and shown in full line in Figure 1 so as to move the wheel 72 to its extended or operative positim.

The hydraulic ram 78 may be connected in the same hydraulic circuit with the rams 43 so that all three rams are operated simultaneously but it is preferred that the control means is such that the ram 78 for the jockey wheel can be operated independently of the rams 43 for the road wheels. If desired however means may also be provided for operating each ram 43 independently particularly where the building is provided with extensible ground engaging supports on which the weight of the building can be taken before the wheels are retracted. Said extensible ground engaging supports may be moved into ground engaging position by hydraulic or mechanical means and wholst hydraulic means for moving the road wheels and jockey wheel into and out of their operative positon as described hereinbefore if desired mechanical means may be provided instead.

An indicating means in the form of an audible warning is provided to indicate when the trailer is not in condition for towing. For example if the jockey wheel is not in its fully retracted position or the road wheels are not in their fully extended position or the locking bolts 51 are not fully engaged with their associated arm 24. In the present example micro switches 82 are provided to sense the positions of the locking bolts 51 but if desired micro switches may be provided to sense the positions of the strut 73 or arms 24. The micro switches are arranged to close an electric circuit to such a warning device if one or more of the appropriate elements are not in their desired positions. Since a trailer must be connected to the electrical circuit of the towing vehicle to provide, for example, brake lights before the building can be towed, when this electrical connection to the towing vehicle is made the hereinbefore described electrical circuit may be energised and the warning given if the parts are not in towing condition. Alternatively the trailer may be provided with an independent battery to energise the warning circuit.

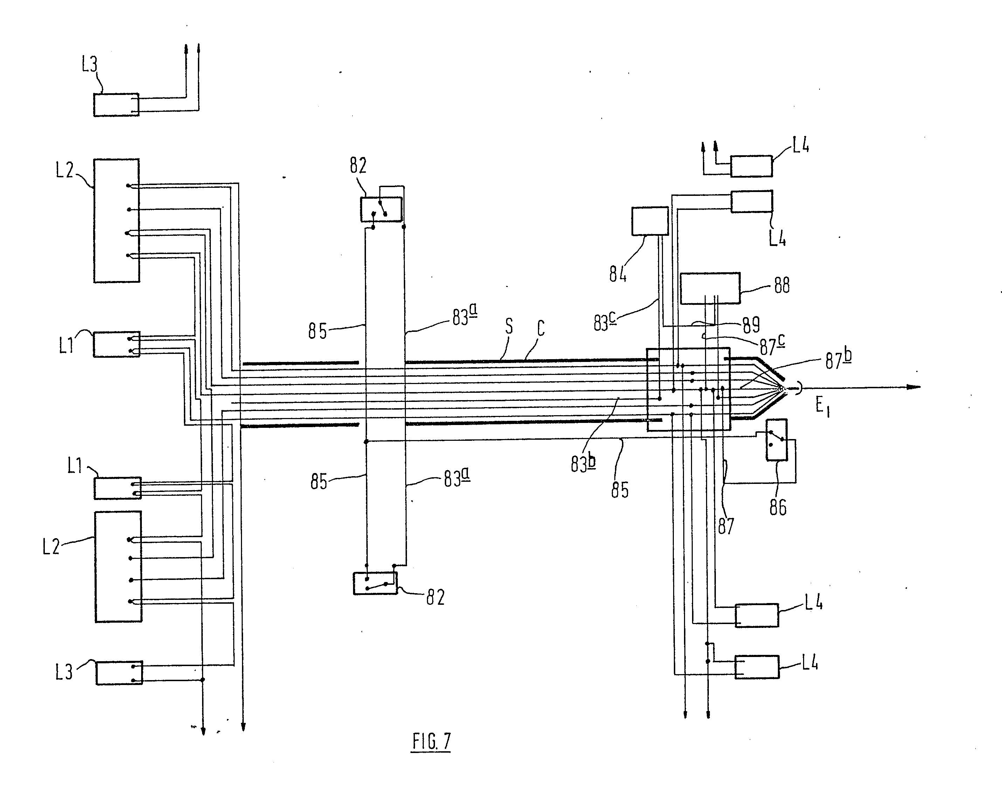

Referring to Figure 7 each micro switch 82 is connected by line 83 to a horn 84 and by line 85 to a further micro switch 86, hereinafter to be described. The switch 86 is connected by a line 87 to one t erminal of a battery 88 whilst the horn 84 is connected by a line 89 to another terminal of the battery 88.

The line 83 comprises two lines 83a extending from the respective micro=switches 82 to the interior of a seven core cable C part of the sheath S of which is removed in the regions shown to permit the connections hereinafter described to be made. Thus the parts 83a are connected to a wire 83b of the seven core cable C whilst a part 83c of the line extends from the wire 83b to the horn 84. The line 85 is a separate line externally of the seven core cable C. The line 87 from the further micro switch is connected to a line 87b within the cable C and the line 87b is connected by a line 87c to the battery 88.

The cable C provides a connection at the end E1 to the tractor and provides connections to the various lighting requirements of the trailer. That is to say a pair of number plate lamps L1; off-side and near-side tail light clusters L2; off-side and near-side marker lamps L3 at the rear of the trailer and upper and lower off-side and near-side marker lamps L4 at the front of the trailer.

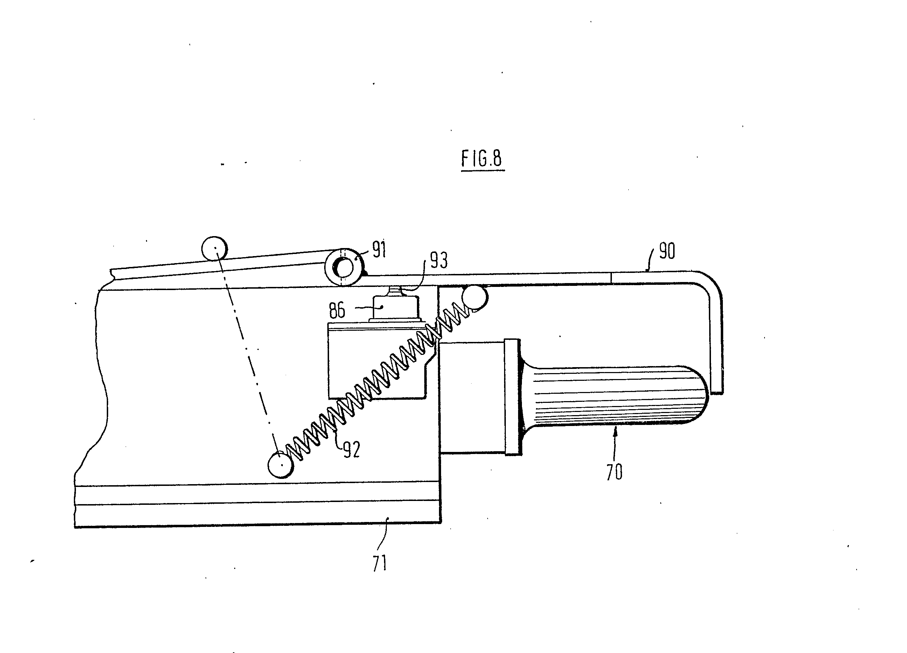

Referring now to Figure 8 a further micro switch 86 is arranged to be operated by a cover member 90, pivotally mounted on the triangular frame 71 as shown at 91 so as to be movable between a position shown in full line in .

Figure 8 in which the towing hitch 70 is obturated and a position shown in chain dotted line in Figure 8 in which the towing hitch 70 is available for connection to a tractor vehicle. A coil tension spring 92 is provided to maintain the cover member 90 in each of the two positions. The operating member 93 of the micro switch 86 is arranged not to be depressed so as to break electric contact when the cover member is in its non-obturating position and the micro switches 82 are normally likewise maintained open when the trailer is in a towing condition with the bolts 51 fully engaged with the arms 24.

Thus when the trailer is in a towing condition the switches 82 and 86 break the electric circuit and no audible warning is given. However if either of the micro-switches 82 are closed, as a result of the bolt 51 not being fully engaged with the arms 24 or the micro switch 86 is closed as a result of obturation of the towing connection 70 the circuit to the horn 84 is energised and the horn caused to sound.

Of course, the circuit may be energised to actuate some other form of warning device as well as, or instead of, the horn. Such alternative warning device may be an illuminated warning.

Alternatively, or as well as providing indicating means, if desired, a movable cover such as the channel section member shown at 80 in Figure 1, may be associated with the towing connection 70. The cover 80 may be operatively interconnected mechanically and/or electrically with the mechanism for operating the locking devices 50. For example, the cover may be moved by a solenoid 81 which is actuated by a signal derived from micro switches, such as those shown at 82 in Figure 4. If desired the cover may be moved as a result of other means sensing the position of the arms 24 or strut 73.

Thus, either the towing connection is obstructed or otherwise rendered inoperative and/or the indicating means indicates that the building is not in a condition for towing.

While the provision of road wheels has been referred to in the above description, it will be understood that a trailer in accordance with the invention could be adapted for rail transport by providing flanged rail wheels in place of road wheels. Also, whilst the trailer may have only a single pair of road wheels, if desired two pairs arranged in tandem, midway along the length thereof may be provided and it is also possible for the wheels to be arranged in pairs which are spaced apart longitudinally of the trailer, for example in positions at, or adjacent to, the points of tri-section of the length of the trailer.

Although in the above described example a trailer in the form of a transportable building with retractable ground wheels has been described, the trailer may be of other form. For example, the trailer may be an open or closed goods trailer provided with, for example, a tailgate lift and micro switches may be provided to indicate when the tailgate lift is in a safe raised position. The micro switches being arranged to be closed to energise a warning circuit to a horn or other warning device when the tailgate lift is not in such a safe raised position and hence when the trailer is not in a towing condition. The invention may be applied to any trailer having a towing connection and equipment which can be in a condition where it is not safe or is undesirable to tow the trailer and the hereinbefore described warning means or towing hitch obstructing means may be arranged to obstruct the hitch or give a warning when such a trailer is not in a towing condition.

The trailer may have more than one set of equipment each of which need to be in a towing condition and there being means to prevent towing or indicate unreadiness for towing unless all the sets of equipment are in a towing condition.

## CLAIMS

1.    A trailer having a plurality of ground wheels and a towing connection characterised in the provision of means for preventing, or indicating unreadiness for use of, the towing connection unless the trailer is in a towing condition.

2.    A trailer according to Claim 1 wherein the trailer has a cover movable into and out of a position in which the towing connection is obstructed by a drive means actuated by a sensor which senses whether the trailer is in a towing condition.

3.    A trailer according to Claim 1 wherein the trailer is provided with means to operate a switch in an electric circuit when a sensor indicates that the trailer is not in a towing condition and the electric circuit being arranged to operate an indicating means.

4.    A trailer according to any one of the preceding claims wherein the ground wheels are retractable relative to a floor structure of the trailer from respective operative positions, in which they transmit the weight of the trailer to the ground to enable it to be transported, to respective inoperative positions, in which the weight of the trailer is transmitted to the ground at least primarily by supporting means other than the said ground wheels and said sensor senses that said wheels are in said operative position and hence that the trailer is in a towing condition.

5.    A trailer according to Claim 4 when dependent on Claim 2 wherein the cover is operatively coupled to the mechanism for retracting the wheels, or to a mechanism for locking the wheels in said operative position, so that the cover is moved into a position in which said towing connection is obstructed unless the wheels are in, or are locked in, their operative position.

6.    A trailer according to Claim 4 when dependent on Claim 3 wherein the means to operate the electric switch is operatively coupled to the mechanism for retracting the wheels, or to a mechanism for locking the wheels in said operative position, so that the switch is operated to actuate the warning means unless the wheels are in, or are locked in, their operative position.

7.    A trailer according to any one of the preceding claims wherein the trailer comprises a transportable building comprising an insulated body structure carried on a rigid floor structure affording a habitable space.

8.    A trailer according to any one of Claims 1 to 6 wherein the trailer has a tailgate lift and said sensor senses that said tailgate lift is in a raised position and hence that the trailer is in a towing condition.

9.    A trailer according to Claim 4 or any one of Claims 5 to 8 when dependent on Claim 4 wherein a locking means is provided to hold the wheels positively in an operative position during transport.

10.     A trailer according to Claim 4 or any one of
Claims 5 to 9 when dependent on Claim 4 wherein each
wheel is carried at one end of an arm which at its
other end is pivotally mounted on or adjacent to the
floor structure and associated with each such arm there
is provided an auxiliary arm which is pivotally connected
to the wheel arm at or adjacent the position where the
latter is itself pivotally supported and at a position
remote from the point at which the two arms are pivotally
interconnected they are further interconnected by the
shock absorbing means, the assembly of wheel arms and
auxiliary arms being movable about the first mentioned
pivot between operative and retracted positions.

FIG.1.

FIG.2.

FIG.3

FIG.4.

3/8

0016847

FIG.5.

FIG.6.

0016847

FIG. 7

FIG.8

0016847

90

70

91

91

71

FIG.9

## DOCUMENTS CONSIDERED TO·BE RELEVANT

| Category | Citation of document with indication, where appropriate, of relevant passages | Relevant to claim |
|---|---|---|
| | US — A — 4 127 855 (T.J.  TONER)<br>* claim 1; fig. *<br><br>--- | 1,3 |
| | US — A — 3 710 370 (A.P. QUILICI<br>   et al.)<br>* claims; fig. *<br><br>--- | 1,3,7 |
| | US — A — 3 361 440 (M. R. GREEN)<br>* column 1, line 1 to column 2,<br>   line 29; fig. *<br><br>--- | 4,7,9<br>10 |
| A | US — A — 3 201 087 (T.B. DALTON)<br>* complete document *<br><br>----- | |

**CLASSIFICATION OF THE APPLICATION (Int. Cl.3)**

B 60 D    1/00
B 62 D   63/08

**TECHNICAL FIELDS SEARCHED (Int.Cl.3)**

.  B 60 D    1/00
B 60 D    7/00
B 60 P    3/00
B 62 D   61/00
B 62 D   63/00

**CATEGORY OF CITED DOCUMENTS**

X: particularly relevant
A: technological background
O: non-written disclosure
P: intermediate document
T: theory or principle underlying
   the invention
E: conflicting application
D: document cited in the
   application
L: citation for other reasons

&: member of the same patent
family,
corresponding document

X | The present search report has been drawn up for all claims

| Place of search | Date of completion of the search | Examiner |
|---|---|---|
| Berlin | 25-10-1979 | LEITZ |

EPO Form 1503.1   06.78